# EUROPÄISCHE PATENTSCHRIFT

(11) **EP 3 760 025 B1**
(45) Veröffentlichungstag und Bekanntmachung des Hinweises auf die Patenterteilung: **17.12.2025**
(21) Anmeldenummer: 19183569.3
(22) Anmeldetag: 01.07.2019
(51) Int. Cl.: A01D 34/90

(54) **BEDIENVORRICHTUNG MIT HANDGRIFF UND MOTORGETRIEBENES ARBEITSGERÄT**
OPERATING DEVICE WITH HANDLE AND ENGINE-DRIVEN WORKING MACHINE
DISPOSITIF DE COMMANDE À POIGNÉE ET APPAREIL DE TRAVAIL ENTRAÎNÉ PAR UN MOTEUR

(43) Veröffentlichungstag der Anmeldung: 06.01.2021
(73) Patentinhaber: Andreas Stihl AG & Co. KG, 71336 Waiblingen (DE)
(72) Erfinder: LÜCKE, Johannes, 71334 Weiblingen (DE); FÖRSTNER, Dirk, 70191 Stuttgart (DE); EHRLER, Denis, 73249 Wernau (DE); VARGA, Michael, 70180 Stuttgart (DE)
(74) Vertreter: Patentanwälte Ruff, Wilhelm, Beier, Dauster & Partner mbB

(56) Entgegenhaltungen:
- EP-A1- 2 474 218
- EP-A1- 2 845 460
- WO-A1-2013/081509
- DE-B4- 102014 006 910

## Beschreibung

Die Erfindung bezieht sich auf ein handgeführtes, motorgetriebenes Arbeitsgerät und auf eine hierfür verwendbare Bedienvorrichtung nach dem Oberbegriff des Anspruchs 1. Diese Bedienvorrichtung beinhaltet einen Handgriff mit einem handumgreifbaren Griffschaft, einen an den Griffschaft anschließenden Bedienelementaufnahmebereich und eine auf den Gerätebetrieb einwirkende Bedieneinheit, die ein Bedienelement umfasst, das zum Betätigen durch einen Finger einer den Griffschaft umgreifenden Hand am Bedienelementaufnahmebereich beweglich gehalten ist und einen sich entlang einer Außenseite des Bedienelementaufnahmebereichs erstreckenden Fingeranlagebereich aufweist.

Unter handgeführten, motorgetriebenen Arbeitsgeräten sind vorliegend Geräte zu verstehen, die einem Arbeitszweck dienen, z.B. der Garten- und/oder Forstbearbeitung, handgetragen oder bodengetragen sind, wobei sie in letzterem Fall von Hand geführt werden, und als Antrieb z.B. eines entsprechenden Arbeitswerkzeugs einen Verbrennungsmotor oder einen Elektromotor besitzen. Garten-/Forstbearbeitungsgeräte dieser Art sind z.B. als Motorsägen, Heckenschneider, Hochentaster, Motorsensen, Heckenscheren, Laubblasgeräte, Kehrgeräte, Rasenmäher und Vertikutierer, jeweils in Verbrennerausführung oder als akkugespeiste Elektroarbeitsgeräte, in Gebrauch, um nur einige Anwendungsbeispiele zu nennen.

An dem Handgriff kann ein Benutzer mit seiner Hand das Arbeitsgerät greifen. Dazu beinhaltet der Handgriff den handumgreifbaren Griffschaft, worunter ein schaft- bzw. rohrförmiger Griffteil des Arbeitsgerätes zu verstehen ist, der vom Benutzer mit einer Hand umgriffen werden kann. Mit Umgreifen ist hierbei gemeint, dass die Hand des Benutzers den Griffschaft über mindestens die Hälfte seines Umfangs und vorzugsweise über deutlich mehr als den halben Umfang bis hin zum vollständigen Umschließen des Griffschafts über seinen ganzen Umfang hinweg ergreift bzw. umgreift. Außerdem weist die Bedienvorrichtung die auf den Gerätebetrieb einwirkende Bedieneinheit auf, durch die der Benutzer den Betrieb des Arbeitsgerätes und insbesondere den Betrieb des dazu dienenden Antriebsmotors steuern oder in anderer Weise beeinflussen kann. Zu dieser Bedieneinheit gehört insbesondere das mit einem Finger der den Griffschaft umgreifenden Hand betätigbare Bedienelement. Optional umfasst die Bedieneinheit ein oder mehrere weitere Bedienelemente.

Das Bedienelement ist beweglich am Bedienelementaufnahmebereich gehalten, der an den Griffschaft in vorzugsweise distaler Richtung anschließt, d.h. in einer am Arbeitsgerät längs einer Gerätelängsachse nach vorn weisenden Richtung, alternativ in proximaler oder lateraler Richtung. Folglich wird eine bequeme Einhandbetätigung des Bedienelements mit der gleichen Hand ermöglicht, mit welcher der Benutzer den Griffschaft ergreift bzw. umgreift. Das Bedienelement weist dazu den sich entlang der Außenseite des Bedienelementaufnahmebereichs erstreckenden Fingeranlagebereich auf. Der Benutzer kann zur Betätigung des Bedienelements mit dem betreffenden Finger gegen den Fingeranlagebereich andrücken und auf diese Weise die Bedienbewegung des Bedienelements bewirken. Wenn der Bedienelementaufnahmebereich distal an den Griffschaft anschließt, kann der Benutzer das Bedienelement besonders bequem durch einen distalen Finger seiner den Griffschaft umgreifenden Hand betätigen. Mit distalem Finger ist jeweils ein Finger gemeint, der an der Hand in Gerätelängsrichtung nach vorn weist, wenn die Hand den Griffschaft umgreift. Dies ist in typischen Fällen insbesondere der Daumen und/oder der Zeigefinger der betreffenden Hand.

Ein Arbeitsgerät dieser Art stellt beispielsweise der von der Anmelderin unter der Modellbezeichnung HLA56 auf den Markt gebrachte, akkugespeiste Heckenschneider dar. Die Bedienvorrichtung dieses Heckenschneiders weist als Bedienelemente einen sich an einer Unterseite des Griffschafts erstreckenden Schalthebel zum Ein- und Ausschalten des Elektromotors, einen Entsperrschieber zum Entsperren des Schalthebels und einen sogenannten Ergo-Hebel auf, der den Entsperrschieber in Position hält, wenn der Schalthebel losgelassen wird. Der Entsperrschieber ist am distal an den Griffschaft anschließenden Bedienelementaufnahmebereich in Axialrichtung, d.h. in einer Richtung parallel zu einer Längsachse des Griffschafts, translationsbeweglich, d.h. verschiebbar, gehalten und dafür eingerichtet, durch einen distalen Finger, insbesondere den Daumen, der den Griffschaft umgreifenden Hand betätigt zu werden, wobei er sich mit einem stegförmigen Fingeranlagebereich U-förmig entlang der Außenseite des Bedienelementaufnahmebereichs in einer Querebene senkrecht zur Längsachse des Griffschafts erstreckt, und zwar speziell über den Oberseitenbereich des Bedienelementaufnahmebereichs hinweg und entlang beidseits angrenzender Seitenbereiche, wobei der Fingeranlagebereich seitlich jeweils noch oberhalb einer Längsmittenebene des Griffschafts und des Bedienelementaufnahmebereichs endet, die den Griffschaft in eine Oberseite mit dem Ergo-Hebel und eine Unterseite mit dem Schalthebel aufteilt.

Eine ähnliche Bedienvorrichtung ist für eine Heckenschere in der Offenlegungsschrift KR 2015-0049507 A offenbart, wobei dort als Entsperrschieber ein Bedienschieber oberseitig am distal an den Griffschaft anschließenden Bedienelementaufnahmebereich axial translationsbeweglich gehalten ist.

Die Patentschrift DE 10 2014 006 910 B4 offenbart einen Grüngutschneider als weiteres Arbeitsgerät der vorliegend betrachteten Art mit einer entsprechend zugehörigen Bedienvorrichtung, die einen an der Unterseite des Griffschafts angeordneten Leistungsschalterauslöser zum Aktivieren des dortigen Antriebsmotors zwecks Antreiben eines Drehschneiders und einen Sicherheitssperrmechanismus zum wahlweisen Blockieren oder Freigeben des Leistungsschalterauslösers umfasst, wobei der Sicherheitssperrmechanismus einen Bedienknopf besitzt, der distal an den Griffschaft anschließend am betreffenden Bedienelementaufnahmebereich um eine zur Schaftlängsachse parallele Drehachse drehbar gehalten ist.

Bei gattungsgemäßen Bedienvorrichtungen nach dem Oberbegriff des Anspruchs 1 ist das fingerbetätigbare Bedienelement ein Schwenkbedienhebel, der um eine Schwenkachse schwenkbeweglich am Bedienelementaufnahmebereich gehalten ist, wobei sich die Schwenkachse mit einer zu einer Schaftlängsachse des Griffschafts senkrechten Hauptrichtungskomponente erstreckt. Bei einer in der Offenlegungsschrift WO 2013/081509 A1 offenbarten Bedienvorrichtung dieser Art ist ein Gashebel vorgesehen, der um eine zur Schaftlängsachse des Griffschafts senkrechte Schwenkachse schwenkbeweglich an einer Seite des Bedienelementaufnahmebereichs gehalten ist und sich von dort L-förmig mit einem ersten Abschnitt entlang dieser Seite des Bedienelementaufnahmebereichs bis zu einer Oberseite des Bedienelementaufnahmebereichs und mit einem zweiten, restlichen Abschnitt, der als Fingeranlagebereich fungiert, senkrecht zur Schaftlängsachse des Griffschafts entlang der Oberseite des Bedienelementaufnahmebereichs bis zu einer der Gashebelanlenkseite gegenüberliegenden Seite des Bedienelementaufnahmebereichs erstreckt. In einer Ausgangsstellung liegt der L-förmige Gashebel in einer Querebene senkrecht zur Schaftlängsachse des Griffschafts. Aus dieser Ausgangsstellung heraus kann der Benutzer den Gashebel nach hinten, d.h. zum Griffschaft hin, verschwenken, wenn er die Motorleistung für das Arbeitsgerät, dort insbesondere ein Freischneider, erhöhen will.

Der Erfindung liegt als technisches Problem die Bereitstellung einer Bedienvorrichtung der eingangs genannten Art zugrunde, die gegenüber dem oben erwähnten Stand der Technik Vorteile insbesondere hinsichtlich komfortabler, flexibler und ergonomischer Betätigung des Bedienelements durch den Benutzer bietet. Des Weiteren liegt der Erfindung als technisches Problem die Bereitstellung eines mit einer solchen Bedienvorrichtung ausgerüsteten, handgeführten, motorgetriebenen Arbeitsgerätes zugrunde.

Die Erfindung löst dieses Problem durch die Bereitstellung einer Bedienvorrichtung mit den Merkmalen des Anspruchs 1 sowie eines handgeführten, motorgetriebenen Arbeitsgerätes mit den Merkmalen des Anspruchs 7. Vorteilhafte Weiterbildungen der Erfindung sind in den Unteransprüchen angegeben.

Bei der erfindungsgemäßen Bedienvorrichtung weist der Fingeranlagebereich in einer Längserstreckung entlang der Außenseite des Bedienelementaufnahmebereichs einen gebogenen und/oder gewinkelten Verlauf mit einer Umfangsrichtungskomponente und einer Axialrichtungskomponente auf.

Folglich erstreckt sich die Schwenkachse des Bedienelements, wie oben erwähnt, senkrecht zur Schaftlängsachse des Griffschafts oder in einem Winkel zwischen 45° und 90° gegenüber dieser geneigt, und der Fingeranlagebereich des Bedienelements verläuft in einer Längserstreckung entlang der Außenseite des Bedienelementaufnahmebereichs über seine gesamte Länge oder jedenfalls in einem oder mehreren Teilabschnitten gebogen oder gewinkelt sowohl mit einer Richtungskomponente in Umfangsrichtung des Bedienelementaufnahmebereichs und damit auch des Griffschafts als auch mit einer Richtungskomponente in der zu dieser Umfangsrichtung senkrechten Axialrichtung. Durch den solchermaßen gebogenen und/oder gewinkelten Verlauf ist der Fingeranlagebereich optimal darauf abgestimmt, dass der Benutzer mit dem jeweils betätigenden Finger an einer zur momentanen Finger- bzw. Handposition am Griffschaft bestpassenden Stelle bequem gegen einen dortigen, zugewandten Abschnitt des Fingeranlagebereichs andrücken kann, um die Schwenkbewegung des Bedienelements zu bewirken. Vorzugsweise stellt der Fingeranlagebereich hierzu mit seinem gebogenen und/oder gewinkelten Verlauf an unterschiedlichen Stellen entlang seiner Längserstreckung Anlagekontaktabschnitte zur Verfügung, von denen zwei oder mehr solcher Abschnitte voneinander verschiedene Flächennormalenrichtungen aufweisen, entlang denen jeweils die das Drehmoment für die Schwenkbewegung erzeugende Druckkraft wirkt, wenn der Benutzer mit dem betreffenden Finger gegen diesen Abschnitt andrückt.

Diese Charakteristika des Bedienelements bieten einen hohen Bedienkomfort für den Benutzer, der dadurch das Bedienelement bequem durch Verschwenken um eine zur Längsachse des Griffschafts senkrechte oder gegenüber dieser jedenfalls deutlich schräg verlaufende Schwenkachse betätigen kann, z.B. wahlweise mit dem Daumen oder dem Zeigefinger seiner den Griffschaft umgreifenden Hand in verschiedenen Stellungen des Fingers und/oder an verschiedenen Stellen des gebogen und/oder gewinkelt wenigstens abschnittweise zum einen in Umfangsrichtung und zum anderen in Axialrichtung verlaufenden Fingeranlagebereichs. Der dadurch erzielte Bedienkomfort kann insbesondere höher sein als bei herkömmlichen Ausführungen, bei denen das Bedienelement axial verschoben oder um eine zur Längsachse des Griffschafts parallele Schwenkachse verschwenkt werden muss.

In einer Weiterbildung der Erfindung weist der Griffschaft oberhalb einer ersten Längsmittenebene einen oberseitigen Handflächenanlagebereich und unterhalb der ersten Längsmittenebene einen unterseitigen Fingergreifbereich auf, und der Fingeranlagebereich erstreckt sich mindestens auf einer von zwei sich bezüglich einer zweiten, zur ersten Längsmittenebene senkrechten Längsmittenebene des Griffschafts gegenüberliegenden Seiten des Bedienelementaufnahmebereichs mit einem gebogenen und/oder gewinkelten Verlauf in Umfangsrichtung und Axialrichtung. Dadurch lässt sich das Bedienelement sehr bequem seitlich am Bedienelementaufnahmebereich betätigen, d.h. an einem Querseitenbereich zwischen einer Griffoberseite, gegen die wenigstens teilweise die Handfläche der den Griffschaft umgreifenden Hand zur Anlage kommt, und einer Griffunterseite, gegen die wenigstens teilweise Finger der den Griffschaft umgreifenden Hand zur Anlage kommen. Alternativ kann sich der Fingeranlagebereich z.B. auch nur längs einer Oberseite oder Unterseite des Bedienelementaufnahmebereichs in Umfangsrichtung und Axialrichtung gebogen und/oder gewinkelt erstrecken.

In einer Ausgestaltung der Erfindung besitzt der Fingeranlagebereich auf der mindestens einen der beiden sich bezüglich der zweiten Längsmittenebene des Griffschafts gegenüberliegenden Seiten des Bedienelementaufnahmebereichs in einem unteren Endbereich einen sich nach hinten oben erstreckenden Abschnitt. Dies ermöglicht eine Bedienbetätigung des Bedienelements mit einer nach vorne oben weisenden Drucckraft, wie sie insbesondere mit dem Daumen der den Griffschaft umgreifenden Hand bequem ausgeübt werden kann.

In einer Weiterbildung der Erfindung weist der Griffschaft oberhalb einer Längsmittenebene einen oberseitigen Handflächenanlagebereich und unterhalb der Längsmittenebene einen unterseitigen Fingergreifbereich auf, und die Schwenkachse befindet.sich unterhalb der Längsmittenebene. Dies optimiert die Lage der Schwenkachse und damit die Schwenkbewegung des Bedienelements in Bezug auf die Lage des Griffschaftes und damit in Bezug auf die Lage der diesen umgreifenden Hand des Benutzers.

In einer Ausgestaltung der Erfindung erstreckt sich der Fingeranlagebereich bügelförmig durchgehend zwischen einem ersten Endbereich auf einer ersten der beiden sich bezüglich der zweiten Längsmittenebene des Griffschafts gegenüberliegenden Seiten des Bedienelementaufnahmebereichs unterhalb der ersten Längsmittenebene des Griffschafts und einem zweiten Endbereich auf der zweiten der beiden sich bezüglich der zweiten Längsmittenebene des Griffschafts gegenüberliegenden Seiten des Bedienelementaufnahmebereichs über einen oberhalb der ersten Längsmittenebene des Griffschafts liegenden Oberseitenbereich des Bedienelementaufnahmebereichs hinweg. Dadurch kann der Benutzer das Bedienelement über einen weiten Bereich der Umfangserstreckung des Bedienelementaufnahmebereichs hinweg variabel und bequem an bestgeeigneter Stelle mit dem jeweils bestpositionierten Finger betätigen.

In einer Weiterbildung der Erfindung beinhaltet die Bedieneinheit als weitere Bedienelemente ein sich in einem Unterseitenbereich des Griffschafts erstreckendes Leistungssteuerbedienelement und ein sich in einem Oberseitenbereich des Griffschafts erstreckendes Sicherungsbedienelement, die am Bedienelementaufnahmebereich beweglich gehalten sind, und der Schwenkbedienhebel ist als ein Sperrhebel ausgeführt, der in einer Sperrstellung eine Bewegung des Leistungssteuerbedienelements und/oder des Sicherungsbedienelements blockiert und in einer Freigabestellung die Bewegung des Leistungssteuerbedienelements und/oder des Sicherungsbedienelements freigibt. Damit stellt die Bedieneinheit eine vorteilhafte Bedienkonfiguration zur Verfügung, wie sie insbesondere für vielerlei elektrisch betriebene Garten- und Forstbearbeitungsgeräte nutzbringend verwendbar ist.

Das erfindungsgemäße, handgeführte, motorgetriebene Arbeitsgerät kann insbesondere ein handgeführtes, motorgetriebenes Garten-/Forstbearbeitungsgerät sein und weist eine erfindungsgemäße Bedienvorrichtung auf.

Vorteilhafte Ausführungsformen der Erfindung sind in den Zeichnungen dargestellt. Diese und weitere vorteilhafte Ausführungsformen der Erfindung werden nachstehend unter Bezugnahme auf die Zeichnungen näher erläutert. Hierbei zeigen:
Fig. 1 eine Seitenansicht eines hinteren Teils eines handgeführten, motorgetriebenen Arbeitsgerätes mit einer Bedienvorrichtung mit fingerbetätigbarem Schwenkbedienhebel,
Fig. 2 eine Perspektivansicht von hinten oben auf einen hier interessierenden Teil der Bedienvorrichtung des Gerätes von Fig. 1,
Fig. 3 eine Seitenansicht des in Fig. 2 gezeigten Geräteteils ohne in Blickrichtung von Fig. 3 vordere Gehäusehälften,
Fig. 4 eine Detailansicht eines Bedienelementaufnahmebereichs von Fig. 1,
Fig. 5 die Ansicht von Fig. 4 mit verschwenktem Schwenkbedienhebel,
Fig. 6 eine Draufsicht zur Seitenansicht von Fig. 4,
Fig. 7 eine Perspektivansicht des fingerbetätigbaren Schwenkbedienhebels,
Fig. 8 eine Seitenansicht der Bedienvorrichtung,
Fig. 9 die Ansicht von Fig. 3 ohne Bedienelemente,
Fig. 10 eine perspektivische Seitenansicht einer Bedienvorrichtung ähnlich derjenigen der Fig. 1 bis 9 in einer Situation mit unterseitiger Daumenbetätigung des schwenkbeweglichen Bedienelements,
Fig. 11 die Ansicht von Fig. 10 in einer Situation mit oberseitiger Daumenbetätigung des Bedienelements und
Fig. 12 die Ansicht von Fig. 10 mit seitlicher Daumenbetätigung des Bedienelements.

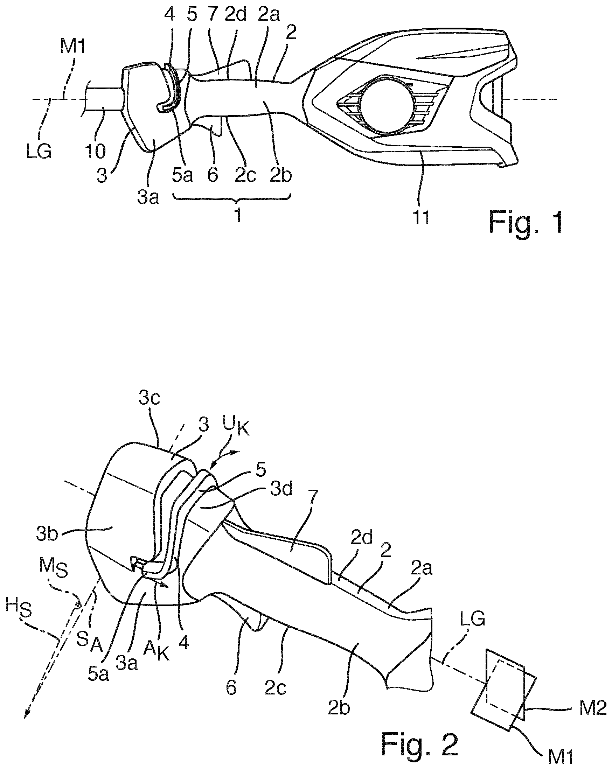

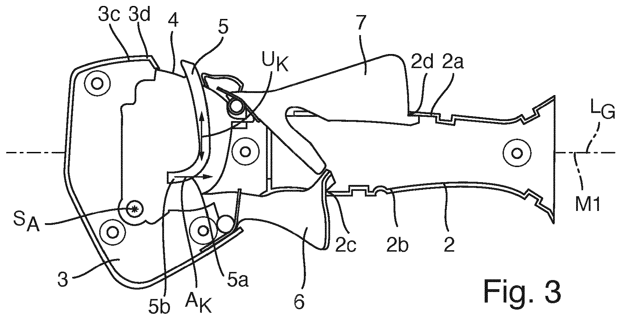

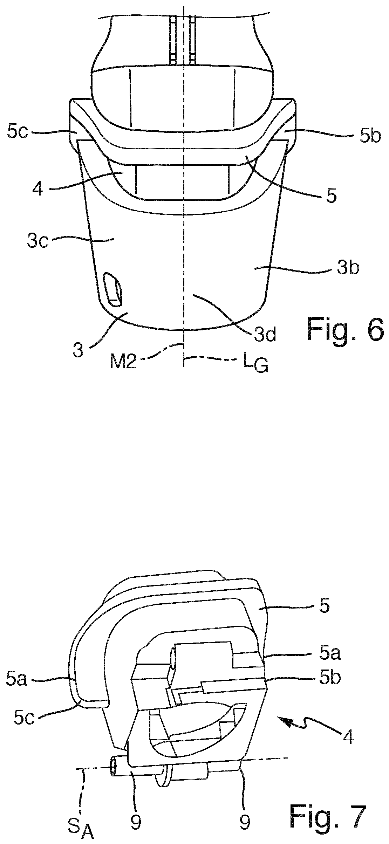

Das in Fig. 1 mit seinem hier wesentlichen Teil gezeigte, handgeführte, motorgetriebene Arbeitsgerät kann beispielsweise ein handgeführtes, motorgetriebenes Garten-/Forstbearbeitungsgerät sein, das als Antriebsmotor einen akkugespeisten Elektromotor oder alternativ einen Verbrennungsmotor besitzt. Das Arbeitsgerät beinhaltet eine erfindungsgemäße Bedienvorrichtung 1, deren hier wesentliche Bestandteile auch in den weiteren Figuren 2 bis 12 gezeigt sind und die darüber hinaus je nach Anwendungsfall weitere, herkömmliche Komponenten umfassen kann. Das Arbeitsgerät kann z.B. ein Heckenschneider, ein Freischneider, ein Hochentaster oder eine Motorsense sein. Bei diesen Anwendungen ist das Arbeitsgerät als sogenanntes Schaftgerät ausgeführt, das in einer herkömmlichen, hier nicht weiter interessierenden und daher nicht gezeigten Weise am vorderen Ende eines hier nur mit seinem hinteren Teil andeutungsweise in Fig. 1 gezeigten Rohrschafts 10 ein entsprechendes Arbeitswerkzeug trägt, während sich die Bedienvorrichtung 1 am hinteren Endbereich des Rohrschafts 10 befindet. In der gezeigten Ausführung weist das Gerät am hinteren Ende einen Gehäusekörper 11 auf, der je nach Geräterealisierung zur Unterbringung des Antriebsmotors und/oder eines Akkupacks dienen kann.

Die Bedienvorrichtung 1 umfasst einen Handgriff mit einem handumgreifbaren Griffschaft 2, einen an den Griffschaft 2 anschließenden Bedienelementaufnahmebereich 3 und eine auf den Betrieb des Geräts und insbesondere auf den Betrieb von dessen Antriebsmotor einwirkende Bedieneinheit. Die Bedieneinheit umfasst ein Bedienelement in Form eines Schwenkbedienhebels 4, der zum Betätigen durch einen Finger einer den Griffschaft 2 umgreifenden Hand um eine Schwenkachse S_{A} schwenkbeweglich am Bedienelementaufnahmebereich 3 gehalten ist und einen sich entlang einer Außenseite 3a des Bedienelementaufnahmebereichs 3 erstreckenden Fingeranlagebereich 5 aufweist.

Die Schwenkachse S_{A} des Schwenkbedienhebels 4 erstreckt sich, wie in Fig. 2 veranschaulicht, mit einer zu einer Schaftlängsachse L_{G} des Griffschafts 2 senkrechten Hauptrichtungskomponente H_{S}. Die Schaftlängsachse L_{G} des Griffschafts 2 kann gleichzeitig auch eine Längsachse des Bedienelementaufnahmebereichs 3 und/oder des Rohrschafts 10 sein.

Dies bedeutet, dass sich die Schwenkachse S_{A} senkrecht zur Schaftlängsachse L_{G} oder jedenfalls unter einem Winkel von mehr als 45° schräg zur Schaftlängsachse L_{G} erstreckt, so dass eine zu dieser Hauptrichtungskomponente H_{S} senkrechte Komponente M_{S} der Richtung der Schwenkachse S_{A} betraglich kleiner als die Hauptrichtungskomponente H_{S} ist. Bei zur Schaftlängsachse L_{G} senkrechter Orientierung der Schwenkachse S_{A} ist diese zur Hauptrichtungskomponente H_{S} senkrechte Richtungskomponente M_{S} gleich null.

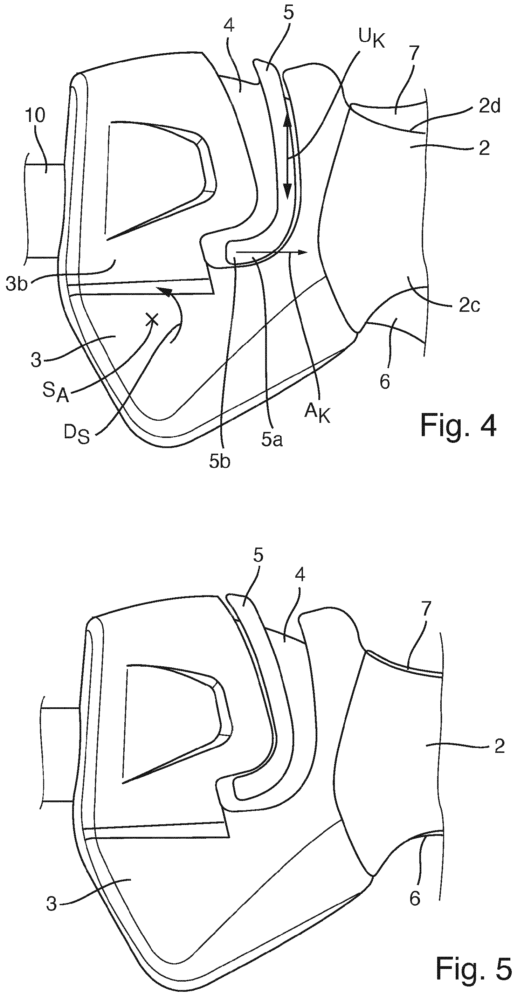

Der Fingeranlagebereich 5 weist in einer Längserstreckung entlang der Außenseite 3a des Bedienelementaufnahmebereichs 3 einen gebogenen und/oder gewinkelten Verlauf mit einer Umfangsrichtungskomponente U_{K} und einer Axialrichtungskomponente A_{K} auf, wie exemplarisch in den Fig. 2 und 4 explizit veranschaulicht. Unter Umfangsrichtungskomponente U_{K} ist hierbei diejenige Richtungskomponente des Längsverlaufs des Fingeranlagebereichs 5 zu verstehen, der senkrecht zur Schaftlängsachse L_{G} orientiert ist, und entsprechend ist unter der Axialrichtungskomponente A_{K} die zur Schaftlängsachse L_{G} parallele Richtungskomponente des Längsverlaufs des Fingeranlagebereichs 5 zu verstehen.

Der Fingeranlagebereich 5 kann beispielsweise wie im gezeigten Fall eine gebogene und/oder gewinkelte Stegform besitzen, d.h. einen Fingeranlagesteg mit einer gewissen Stegbreite und einer demgegenüber deutlich größeren Steglänge bilden, wobei in diesem Fall die Steglänge die Längserstreckung des Fingeranlagebereichs 5 darstellt.

In vorteilhaften Ausführungen weist der Griffschaft 2 wie im gezeigten Beispiel oberhalb einer ersten Längsmittenebene M1 einen oberseitigen Handflächenanlagebereich 2a und unterhalb der ersten Längsmittenebene M1 einen unterseitigen Fingergreifbereich 2b auf, wie in den Fig. 1 bis 3 angegeben. Der Fingeranlagebereich 5 erstreckt sich hierbei mindestens auf einer von zwei sich bezüglich einer zweiten Längsmittenebene M2 des Griffschafts 2 gegenüberliegenden Seiten 3b, 3c des Bedienelementaufnahmebereichs 3 mit einem gebogenen und/oder gewinkelten Verlauf in Umfangsrichtung und Axialrichtung, wie ebenfalls beispielsweise aus den Fig. 1 bis 3 ersichtlich. Dabei wird ohne Beschränkung der Allgemeinheit zur Orientierungsdefinition eine in den Fig. 1 bis 3 obenliegende Seite über der ersten Längsmittenebene M1 als Oberseite und eine in den Fig. 1 bis 3 untere Seite unter der ersten Längsmittenebene M1 als eine Unterseite bezeichnet. Dies in Anlehnung daran, dass das Arbeitsgerät in entsprechenden Ausführungen in einer typischen Betriebssituation vom Benutzer so gehalten wird, dass diese Oberseite vertikal nach oben und dementsprechend die Unterseite vertikal nach unten zeigt.

Im gezeigten Ausführungsbeispiel erstreckt sich der Fingeranlagebereich 5 an beiden lateralen Seiten 3b, 3c, vorliegend auch als Querseiten bezeichnet. In alternativen Ausführungen erstreckt sich der Fingeranlagebereich 5 nur auf der einen dieser beiden Seiten 3b, 3c, d.h. in der Ansicht von Fig. 1 nur an der vorderen oder nur an der hinteren Seite.

In vorteilhaften Ausführungen besitzt der Fingeranlagebereich 5 auf der mindestens einen der beiden sich bezüglich der zweiten Längsmittenebene M2 des Griffschafts 2 gegenüberliegenden Seiten 3b, 3c des Bedienelementaufnahmebereichs 3 in einem unteren Endbereich, d.h. in einem zu der besagten Unterseite hin weisenden Endbereich, einen sich nach hinten oben erstreckenden Abschnitt 5a, wie ebenfalls beispielsweise wieder in den Fig. 1 bis 3 für eine Realisierung zu erkennen, bei der dieser sich nach hinten oben erstreckende Abschnitt 5a an beiden Seiten 3b, 3c vorgesehen ist. Mit hinten ist dabei die in Fig. 1 nach rechts zeigende Geräterichtung zu verstehen, mit vorn die entgegengesetzte, in Fig. 1 nach links weisende Geräterichtung. Vorliegend ist die Richtung nach vorn auch als distale Richtung bezeichnet.

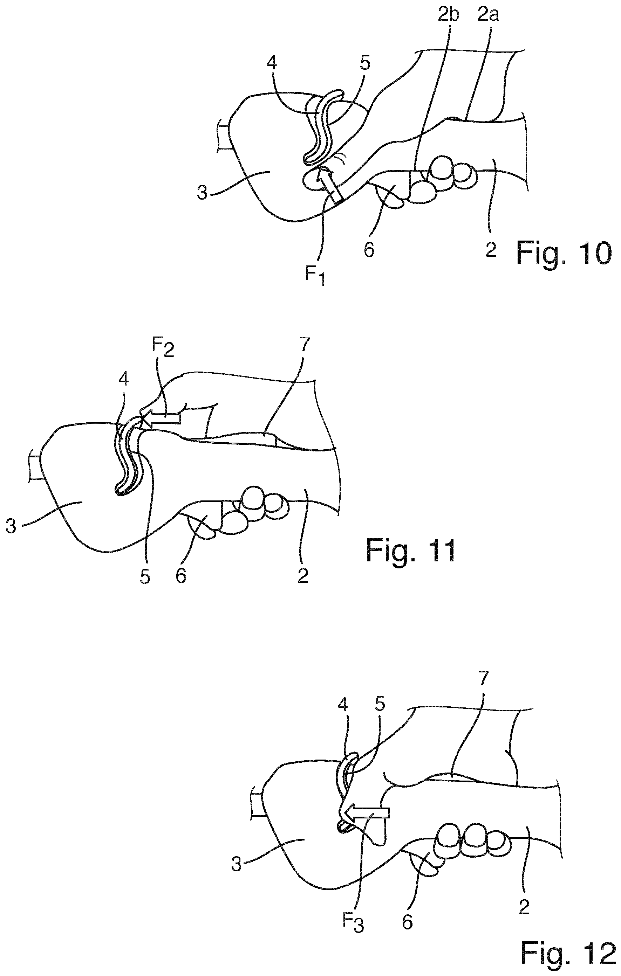

Der dergestalt orientierte Abschnitt 5a des Fingeranlagebereichs 5, der folglich kombiniert mit Umfangsrichtungskomponente U_{K} und Axialrichtungskomponente A_{K} verläuft, stellt dementsprechend eine Anlagekontaktfläche dar, gegen die der Benutzer z.B. mit seinem Daumen in Richtung nach vorn oben andrücken kann, wie in Fig. 10 für eine zugehörige Betätigungssituation durch einen Druckbestätigungspfeil als Druckkraft F₁ dargestellt. Fig. 10 zeigt speziell eine Situation, bei welcher der Benutzer mit der Daumenspitze der den Griffschaft 2 umgreifenden Hand gegen diesen unteren Abschnitt 5a des Fingeranlagebereichs 5 des Bedienelements 4 andrückt.

In vorteilhaften Ausführungsformen schließt der Bedienelementaufnahmebereich 3 wie im gezeigten Beispiel distal, d.h. in einer in Fig. 1 nach links bzw. in Richtung Vorderseite des Arbeitsgeräts weisenden Richtung, an den Griffschaft 2 an. Die Betätigung des Schwenkbedienhebels 4 kann in diesem Fall sehr bequem mit einem distalen Finger der den Griffschaft umgreifenden Hand des Benutzers erfolgen, insbesondere mit dem Daumen und/oder dem Zeigefinger dieser Hand.

In vorteilhaften Ausführungen weist der Griffschaft 2 oberhalb der Längsmittenebene M1 den oberseitigen Handflächenanlagebereich 2a und unterhalb der Längsmittenebene M1 den unterseitigen Fingergreifbereich 2b auf, und die Schwenkachse S_{A} befindet sich unterhalb der Längsmittenebene M1. Damit lässt sich ein günstiges Schwenkbewegungsverhalten und eine bequeme und kraftsparende Fingerbetätigbarkeit für den Schwenkbedienhebel erzielen. In alternativen Ausführungen befindet sich die Schwenkachse S_{A} auf Höhe oder oberhalb der Längsmittenebene M1.

In vorteilhaften Ausführungen erstreckt sich der Fingeranlagebereich 5 wie im gezeigten Beispiel bügelförmig durchgehend zwischen einem ersten Endbereich 5b auf einer ersten Seite 3b der beiden sich bezüglich der zweiten Längsmittenebene M2 des Griffschafts 2 gegenüberliegenden Seiten 3b, 3c des Bedienelementaufnahmebereichs 3 unterhalb der ersten Längsmittenebene M1 des Griffschafts 2 und einem zweiten Endbereich 5c auf der zweiten Seite 3c dieser beiden Seiten 3b, 3c unterhalb der ersten Längsmittenebene M1 des Griffschafts 2 über einen oberhalb der ersten Längsmittenebene M1 liegenden Oberseitenbereich 3d des Bedienelementaufnahmebereichs 3 hinweg. Dies realisiert eine Erstreckung des Fingeranlagebereichs 5 über einen Großteil des Umfangs des Bedienelementaufnahmebereichs 3 hinweg, so dass der Benutzer flexibel und variabel den Schwenkbedienhebel 4 mit einem geeigneten Finger an jeweils passender Stelle längs der Längserstreckung des Fingeranlagebereichs 5 betätigend kontaktieren kann. In alternativen Ausführungen erstreckt sich der Fingeranlagebereich 5 nur auf der einen Querseite 3b oder nur auf der anderen Querseite 3c oder nur im Oberseitenbereich 3d des Bedienelementaufnahmebereichs 3 oder weiter alternativ nur an zwei dieser drei Seiten 3b, 3c, 3d oder in weiteren alternativen Ausführungen im Unterseitenbereich des Bedienelementaufnahmebereichs 3 und optional auf einer der drei anderen Seite 3b, 3c, 3d.

In vorteilhaften Ausführungsformen umfasst die auf den Betrieb des Arbeitsgeräts einwirkende Bedieneinheit der Bedienvorrichtung als weitere Bedienelemente ein sich in einem Unterseitenbereich 2c des Griffschafts 2 erstreckendes Leistungssteuerbedienelement 6 und ein sich in einem Oberseitenbereich 2d des Griffschafts 2 erstreckendes Sicherungsbedienelement 7. Das Leistungssteuerbedienelement 6 und das Sicherungsbedienelement 7 sind am Bedienelementaufnahmebereich 3 beweglich, z.B. schwenkbeweglich oder alternativ verschiebbar, gehalten. Der Schwenkbedienhebel 4 ist in diesem Fall als ein Sperrhebel ausgeführt, der in einer Sperrstellung eine Bewegung des Leistungssteuerbedienelements 6 und/oder des Sicherungsbedienelements 7 blockiert und in einer Freigabestellung die Bewegung des Leistungssteuerbedienelements 6 und/oder des Sicherungsbedienelements 7 freigibt. Diese vorteilhafte Bedienkonfiguration mit den genannten drei Bedienelementen eignet sich besonders gut für zugehörige Typen von Arbeitsgeräten, wie durch den Stand der Technik an sich bekannt, was daher hier keiner näheren Beschreibung bedarf, z.B. für Heckenschneider, Hochentaster, Motorsensen und andere derartige Garten- und/oder Forstbearbeitungsgeräte. Das Leistungssteuerbedienelement kann beispielsweise ein Ein/Aus-Schaltelement für ein akkugespeistes elektrisches Arbeitsgerät oder ein Gashebel für ein Arbeitsgerät mit Verbrennungsmotor sein. Das Sicherungsbedienelement 7 kann beispielsweise die Funktion haben, die Betätigung des Leistungssteuerbedienelements 6 in einer Sperrstellung zu blockieren und in einer Freigabestellung freizugeben und auf diese Weise das Leistungssteuerbedienelement 6 gegen unbeabsichtigtes Betätigen zu sichern.

Das Blockieren und Freigeben des Leistungssteuerbedienelements 6 und/oder des Sicherungsbedienelements 7 durch den Schwenkbedienhebel 4 kann beispielsweise jeweils mechanisch realisiert sein, wie im gezeigten Ausführungsbeispiel, ebenso das etwaige Blockieren und Freigeben des Leistungssteuerbedienelements 6 durch das Sicherungsbedienelement 7.

In einer typischen Realisierung gibt das Sicherungsbedienelement 7 die Betätigung des Leistungssteuerbedienelements 6 erst frei, wenn es von einem in Fig. 1 gezeigten Ausgangszustand durch die Handfläche der den Griffschaft 2 umgreifenden Hand in den Griffschaft 2 hineingedrückt wird, wie in den Betriebssituationen der Fig. 10 bis 12 gezeigt, und der als Sperrhebel fungierende Schwenkbedienhebel 4 gibt das Sicherungsbedienelement 7 und/oder das Leistungssteuerbedienelement 6 nur dann frei, wenn es vom Benutzer ausgehend von der Ausgangsstellung gemäß den Fig. 1 bis 4 in eine Entsperrstellung gemäß Fig. 5 verschwenkt wird. Erst nach derartiger Freigabe der Bewegung des Leistungssteuerbedienelements 6 kann letzteres vorzugsweise von einem oder mehreren Fingern der den Griffschaft 2 umgreifenden Hand funktionsgemäß betätigt werden.

Wenn sich der Schwenkbedienhebel 4 mit seinem Fingeranlagebereich 5 ausschließlich oder zumindest auch im Oberseitenbereich 3d des Bedienelementaufnahmebereichs 3 erstreckt, kann der Benutzer dort den Schwenkbedienhebel 4 beispielsweise in der in Fig. 11 veranschaulichten Weise dadurch verschwenkend betätigen, dass er mit einer im Wesentlichen distal nach vorn gerichteten Druckkraft F₂ gegen den Fingeranlagebereich 5 andrückt.

Der gebogene und/oder gewinkelte Verlauf des Fingeranlagebereichs 5 mit Umfangsrichtungskomponente U_{K} und Axialrichtungskomponente A_{K} in mindestens einem der beiden Querseiten 3b, 3c des Bedienelementaufnahmebereichs 3 ermöglicht beispielsweise auch eine Betätigung des Schwenkbedienhebels 4 mit dem vorderen Daumengelenk, wie in Fig. 12 veranschaulicht. Dabei drückt der Benutzer mit diesem Bereich seines Daumens unter Ausübung einer im Wesentlichen distal nach vorn weisenden Druckkraft F₃ gegen den Fingeranlagebereich 5 in dessen dortigem Abschnitt an.

Je nach konkreter Ausführung des gebogenen und/oder gewinkelten Verlaufs des Fingeranlagebereichs 5 sind statt oder zusätzlich zu den in den Fig. 10 bis 12 veranschaulichten Betätigungsvarianten andere und/oder weitere Betätigungsvarianten für die Fingerbetätigung des Schwenkbedienhebels 4 möglich. Beispielsweise kann der Benutzer den Schwenkbedienhebel 4 auch mit dem Zeigefinger verschwenkend betätigen, wenn sich der Fingeranlagebereich 5 ausschließlich oder jedenfalls auch im Bereich distal vor der Position befindet, an welcher der Zeigefinger liegt, wenn der Benutzer den Griffschaft 2 mit seiner Hand bestimmungsgemäß greift bzw. umgriffen hält.

Die in den Fig. 10 bis 12 gezeigte Ausführungsvariante entspricht derjenigen der Fig. 1 bis 9 mit der einzigen Ausnahme, dass der gebogene und/oder gewinkelte Verlauf des Fingeranlagebereichs 5 des Schwenkbedienhebels 4 etwas modifiziert ist. Während im Ausführungsbeispiel der Fig. 1 bis 9 der Fingeranlagebereich 5 vom einen unteren Endbereich 5b zunächst axial nach vorn, dann in einem Bogen nach oben und geringfügig nach vorn bis zur Oberseite und von dort spiegelsymmetrisch zum zweiten Endbereich 5c verläuft, verläuft er in der Ausführungsvariante der Fig. 10 bis 12 vom jeweiligen unteren Endbereich 5b, 5c mit einem S-förmig geschwungenen Verlauf zum Oberseitenbereich 3d.

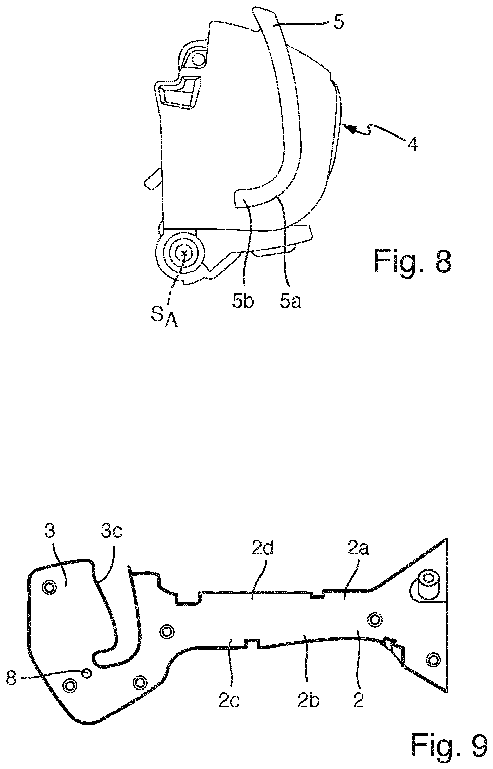

In allen Fällen drückt der Benutzer mit ausreichendem Abstand der Berührkontaktstelle zur Schwenkachse S_{A} gegen den Fingeranlagebereich 5 an, wodurch die jeweilige Betätigungsdruckkraft F₁, F₂, F₃ ein entsprechendes, in Fig. 4 angedeutetes Drehmoment D_{S} zum Verschwenken des Schwenkbedienhebels 4 um die Schwenkachse S_{A} erzeugt. des Bedienelementaufnahmebereichs 3. Dazu ist der Fingeranlagebereich 5 in seiner Lage und Form geeignet auf die Lage der Schwenkachse S_{A} abgestimmt. Die Schwenkachse S_{A} ist im gezeigten Beispiel dadurch definiert, dass der Schwenkbedienhebel 4 mit je einem Achsstummel 9 an beiden Querseiten in je einer Achsstummelaufnahme 8 an einer Innenseite zweier Halbschalenkörper schwenkbeweglich gelagert ist, die zusammen ein Außengehäuse des Griffschafts 2 und des Bedienelementaufnahmebereichs 3 bilden, wobei Fig. 9 eine Seitenansicht auf die Innenseite eines der beiden Halbschalenkörper zeigt.

Wie die gezeigten und die weiteren oben erläuterten Ausführungsbeispiele deutlich machen, stellt die Erfindung eine Bedienvorrichtung mit einer auf den Gerätebetrieb einwirkenden Bedieneinheit zur Verfügung, die einen Schwenkbedienhebel aufweist, der mit einem Finger einer einen Griffschaft der Bedienvorrichtung umgreifenden Hand durch den Benutzer betätigbar ist, was eine Einhandbedienung mit einer Hand ermöglicht, die bei Bedarf gleichzeitig zum Halten bzw. Tragen oder Führen des Arbeitsgeräts genutzt wird, wobei der Schwenkbedienhebel einen Fingeranlagebereich mit charakteristischem, gebogenem und/gewinkelten Verlauf besitzt, der dem Benutzer eine bequeme, ergonomische und/oder variable Fingerbetätigung des Schwenkbedienhebels ermöglicht.

## Patentansprüche

1. Bedienvorrichtung für ein handgeführtes, motorgetriebenes Arbeitsgerät, insbesondere ein handgeführtes, motorgetriebenes Garten-/Forstbearbeitungsgerät, mit
- einem Handgriff mit einem handumgreifbaren Griffschaft (2),
- einem an den Griffschaft (2) anschließenden Bedienelementaufnahmebereich (3) und
- einer auf den Gerätebetrieb einwirkenden Bedieneinheit, die ein Bedienelement umfasst, das zum Betätigen durch einen Finger einer den Griffschaft (2) umgreifenden Hand am Bedienelementaufnahmebereich (3) beweglich gehalten ist und einen sich entlang einer Außenseite (3a) des Bedienelementaufnahmebereichs (3) erstreckenden Fingeranlagebereich (5) aufweist, der in einer Längserstreckung entlang der Außenseite (3a) des Bedienelementaufnahmebereichs (3) einen gebogenen und/oder gewinkelten Verlauf mit einer Umfangsrichtungskomponente (U_{K}) aufweist,
- wobei das Bedienelement ein Schwenkbedienhebel (4) ist, der um eine Schwenkachse (S_{A}) schwenkbeweglich am Bedienelementaufnahmebereich (3) gehalten ist, die sich mit einer zu einer Schaftlängsachse (L_{G}) des Griffschafts (2) senkrechten Hauptrichtungskomponente (H_{S}) erstreckt,
**dadurch gekennzeichnet, dass**
- der gebogene und/oder gewinkelte Verlauf der Längserstreckung des Fingeranlagebereichs (5) entlang der Außenseite (3a) des Bedienelementaufnahmebereichs (3) zusätzlich zu der Umfangsrichtungskomponente (U_{K}) eine zur Schaftlängsachse (L_{G}) des Griffschafts (2) parallele Axialrichtungskomponente (A_{K}) aufweist.

2. Bedienvorrichtung nach Anspruch 1, weiter **dadurch gekennzeichnet, dass** der Griffschaft (2) oberhalb einer ersten Längsmittenebene (M1) einen oberseitigen Handflächenanlagebereich (2a) und unterhalb der ersten Längsmittenebene (M1) einen unterseitigen Fingergreifbereich (2b) aufweist und sich der Fingeranlagebereich (5) mindestens auf einer von zwei sich bezüglich einer zweiten, zur ersten Längsmittenebene (M1) senkrechten Längsmittenebene (M2) des Griffschafts (2) gegenüberliegenden Seiten (3b, 3c) des Bedienelementaufnahmebereichs (3) mit einem gebogenen und/oder gewinkelten Verlauf in Umfangsrichtung und Axialrichtung erstreckt.

3. Bedienvorrichtung nach Anspruch 2, weiter **dadurch gekennzeichnet, dass** der Fingeranlagebereich (5) auf der mindestens einen der beiden sich bezüglich der zweiten Längsmittenebene (M2) des Griffschafts (2) gegenüberliegenden Seiten (3b, 3c) des Bedienelementaufnahmebereichs (3) in einem unteren Endbereich einen sich nach hinten oben erstreckenden Abschnitt (5a) besitzt.

4. Bedienvorrichtung nach einem der Ansprüche 1 bis 3, weiter **dadurch gekennzeichnet, dass** der Griffschaft (2) oberhalb einer Längsmittenebene (M1) einen oberseitigen Handflächenanlagebereich (2a) und unterhalb der Längsmittenebene (M1) einen unterseitigen Fingergreifbereich (2b) aufweist und sich die Schwenkachse (S_{A}) unterhalb der Längsmittenebene (M1) befindet.

5. Bedienvorrichtung nach Anspruch 4, weiter **dadurch gekennzeichnet, dass** sich der Fingeranlagebereich (5) bügelförmig durchgehend zwischen einem ersten Endbereich (5b) auf einer ersten (3b) der beiden sich bezüglich der zweiten Längsmittenebene (M2) des Griffschafts (2) gegenüberliegenden Seiten (3b, 3c) des Bedienelementaufnahmebereichs (3) unterhalb der ersten Längsmittenebene (M1) des Griffschafts (2) und einem zweiten Endbereich (5c) auf der zweiten (3c) der beiden sich bezüglich der zweiten Längsmittenebene (M2) des Griffschafts (2) gegenüberliegenden Seiten (3b, 3c) des Bedienelementaufnahmebereichs (3) über einen oberhalb der Längsmittenebene (M1) des Griffschafts (2) liegenden Oberseitenbereich (3d) des Bedienelementaufnahmebereichs (3) hinweg erstreckt.

6. Bedienvorrichtung nach einem der Ansprüche 1 bis 5, weiter **dadurch gekennzeichnet, dass**
- die Bedieneinheit als weitere Bedienelemente ein sich in einem Unterseitenbereich (2c) des Griffschafts (2) erstreckendes Leistungssteuerbedienelement (6) und ein sich in einem Oberseitenbereich (2d) des Griffschafts (2) erstreckendes Sicherungsbedienelement (7) umfasst, die am Bedienelementaufnahmebereich (3) beweglich gehalten sind, und
- der Schwenkbedienhebel (4) als ein Sperrhebel ausgeführt ist, der in einer Sperrstellung eine Bewegung des Leistungssteuerbedienelements (6) und/oder des Sicherungsbedienelements (7) blockiert und in einer Freigabestellung die Bewegung des Leistungssteuerbedienelements (6) und/oder des Sicherungsbedienelements (7) freigibt.

7. Handgeführtes, motorgetriebenes Arbeitsgerät, insbesondere handgeführtes, motorgetriebenes Garten-/Forstbearbeitungsgerät, **gekennzeichnet durch** eine Bedienvorrichtung (1) nach einem der Ansprüche 1 bis 6.

## Claims

1. An operating device for a hand-guided motorised working apparatus, in particular a hand-guided motorised garden/forestry apparatus, comprising
- a handle with a handle shank (2) configured to be hand-gripped,
- an operating element receiving region (3) adjoining the handle shank (2), and
- an operating unit which acts on the apparatus operation and comprises an operating element which is held movably on the operating element receiving region (3) for actuation by a finger of a hand gripping the handle shank (2), and comprises a finger rest region (5) extending along an outer side (3a) of the operating element receiving region (3), wherein the finger rest region (5), in a longitudinal extension along the outer side (3a) of the operating element receiving region (5), has a bent and/or an angled course with a circumferential direction component (U_{K}), wherein the operating element is a pivot operating lever (4) which is held on the operating element receiving region (5) so as to be pivotable about a pivot axis (S_{A}), which extends with a main direction component (H_{S}) perpendicular to a shank longitudinal axis (L_{G}) of the handle shank (2),
**characterized in that**
- the bent and/or angled course of the longitudinal extension of the finger rest region along the outer side (3a) of the operating element receiving region (5) has an axial direction component (A_{K}) parallel to the longitudinal axis (L_{G}) of the handle shank (2) in addition to the circumferential direction component (U_{K}).

2. The operating device according to Claim 1, further **characterized in that** the handle shank (2) comprises an upper palm rest region (2a) above a first longitudinal centre plane (M1), and a lower finger gripping region (2b) below the first longitudinal centre plane (M1), and the finger rest region (5) extends, at least on one of two mutually opposite sides (3b, 3c) of the operating element receiving region (3) relative to a second longitudinal centre plane (M2) of the handle shank (2) perpendicular to the first longitudinal centre plane (M1), with a bent and/or an angled course in circumferential direction and axial direction.

3. The operating device according to Claim 2, further **characterized in that** the finger rest region (5), on the at least one of the two mutually opposite sides (3b, 3c) of the operating element receiving region (3) relative to the second longitudinal centre plane (M2) of the handle shank (2), in a lower end region, has a portion (5a) extending upward towards the rear.

4. The operating device according to one of Claims 1 to 3, further **characterized in that** the handle shank (2) comprises an upper palm rest region (2a) above a longitudinal centre plane (M1), and a lower finger gripping region (2b) below the longitudinal centre plane (M1), and the pivot axis (S_{A}) lies below the longitudinal centre plane (M1).

5. The operating device according to Claim 4, further **characterized in that** the finger rest region (5) extends arch-shaped continuously between a first end region (5b) on a first (3b) of the two mutually opposite sides (3b, 3c) of the operating element receiving region (3) relative to the second longitudinal centre plane (M2) of the handle shank (2), below the first longitudinal centre plane (M1) of the handle shank (2), and a second end region (5c) on the second (3c) of the two mutually opposite sides (3b, 3c) of the operating element receiving region (3) relative to the second longitudinal centre plane (M2) of the handle shank (2), over a top side region (3d) of the operating element receiving region (3) lying above the longitudinal centre plane (M1) of the handle shank (2).

6. The operating device according to one of Claims 1 to 5, further **characterized in that**
- the operating unit, as further operating elements, comprises a power control operating element (6) extending in a bottom region (2c) of the handle shank (2), and a safety operating element (7) extending in a top side region (2d) of the handle shank (2), both being held movably on the operating element receiving region (3), and
- the pivot operating lever (4) is configured as a blocking lever which in a blocking position blocks a movement of the power control operating element (6) and/or the safety operating element (7), and in a release position allows the movement of the power control operating element and/or the safety operating element.

7. A hand-guided motorised working apparatus, in particular a hand-guided motorised garden/forestry apparatus, **characterized by** an operating device (1) according to one of Claims 1 to 6.

## Revendications

1. Dispositif de commande pour un appareil de travail motorisé à guidage manuel, en particulier un appareil de jardinage/de sylviculture motorisé à guidage manuel, avec
- une poignée avec un manche (2) pouvant être saisi d'une main,
- une zone de logement d'élément de commande (3) se raccordant au manche (2), et
- une unité de commande agissant sur le fonctionnement de l'appareil, qui comprend un élément de commande qui est maintenu de manière mobile sur la zone de logement d'élément de commande (3) pour l'actionnement par un doigt d'une main saisissant le manche (2) et qui comporte une zone d'appui de doigt (5) s'étendant le long d'un côté extérieur (3a) de la zone de logement d'élément de commande (3), qui présente un profil courbé et/ou incliné avec une composante directionnelle périphérique (U_{K}) dans une extension longitudinale le long du côté extérieur (3a) de la zone de logement d'élément de commande (3),
- l'élément de commande étant un levier de commande de pivotement (4), qui est maintenu sur la zone de logement d'élément de commande (3) de manière mobile par pivotement autour d'un axe de pivotement (S_{A}), qui s'étend avec une composante directionnelle principale (H_{S}) perpendiculaire à l'axe longitudinal de manche (L_{G}) du manche (2),
**caractérisé en ce que**
- le profil courbé et/ou incliné de l'extension longitudinale de la zone d'appui de doigt (5) présente, le long du côté extérieur (3a) de la zone de logement d'élément de commande (3), en plus de la composante directionnelle périphérique (U_{K}), une composante directionnelle axiale (A_{K}) parallèle à l'axe longitudinal de manche (L_{G}) du manche (2).

2. Dispositif de commande selon la revendication 1, **caractérisé en outre en ce que** le manche (2) comporte au-dessus d'un premier plan médian longitudinal (M1) une zone d'appui de surface de main (2a) côté supérieur et, en dessous du premier plan médian longitudinal (M1) une zone de préhension de doigt (2b) côté inférieur et la zone d'appui de doigt (5) s'étend dans la direction périphérique et dans la direction axiale avec un profil courbé et/ou incliné sur un de deux côtés (3b, 3c) de la zone de logement d'élément de commande (3)se faisant face par rapport à un deuxième plan médian longitudinal (M2) du manche (2) perpendiculaire au premier plan médian longitudinal (M1).

3. Dispositif de commande selon la revendication 2, **caractérisé en outre en ce que** la zone d'appui de doigt (5) possède une section (5a) s'étendant en haut vers l'arrière dans une zone d'extrémité inférieure sur l'au moins un des deux côtés (3b, 3c) de la zone de logement d'élément de commande (3) se faisant face par rapport au deuxième plan médian longitudinal (M2) du manche (2).

4. Dispositif de commande selon l'une des revendications 1 à 3, **caractérisé en outre en ce que** le manche (2) comporte au-dessus d'un plan médian longitudinal (M1) une zone d'appui de surface de main (2a) côté supérieur et, en dessous du plan médian longitudinal (M1) une zone de préhension de doigt (2b) côté inférieur et l'axe de pivotement (S_{A}) se trouve en dessous du plan médian longitudinal (M1).

5. Dispositif de commande selon la revendication 4, **caractérisé en outre en ce que** la zone d'appui de doigt (5) s'étend en forme de cintre en continu entre une première zone d'extrémité (5b) sur un premier (3b) des deux côtés (3b, 3c) de la zone de logement d'élément de commande (3) se faisant face par rapport au deuxième plan médian longitudinal (M2) du manche (2) en dessous du premier plan médian longitudinal (M1) du manche et une deuxième zone d'extrémité (5c) sur le deuxième (3c) des deux côtés (3b, 3c) de la zone de logement d'élément de commande (3) se faisant face par rapport au deuxième plan médian longitudinal (M2) du manche (2) au-delà d'une zone latérale supérieure (3d) de la zone de logement d'élément de commande (3) située au-dessus du plan médian longitudinal (M1) du manche (2).

6. Dispositif de commande selon l'une des revendications 1 à 5, **caractérisé en outre en ce que**
- l'unité de commande comprend en tant qu'éléments de commande supplémentaires un élément de commande de régulation de puissance (6) s'étendant dans une zone latérale inférieure (2c) du manche (2) et un élément de commande de sécurité (7) s'étendant dans une zone latérale supérieure (2d) du manche (2), qui sont maintenus de manière mobile sur la zone de logement d'élément de commande (3), et
- le levier de commande de pivotement (4) est réalisé comme un levier de verrouillage, qui bloque, dans une position de verrouillage, un mouvement de l'élément de commande de régulation de puissance (6) et/ou de l'élément de commande de sécurité (7) et débloque, dans une position de déblocage, le mouvement de l'élément de commande de régulation de puissance (6) et/ou de l'élément de commande de sécurité (7).

7. Appareil de travail motorisé à guidage manuel, en particulier appareil de jardinage/sylviculture motorisé à guidage manuel, **caractérisé par** un dispositif de commande (1) selon l'une des revendications 1 à 6.
